# EUROPEAN PATENT SPECIFICATION

(11) **EP 0 569 636 B1**
(45) Date of publication and mention of the grant of the patent: **10.03.1999**
(21) Application number: 92304388.9
(22) Date of filing: 15.05.1992
(51) Int. Cl.: G11B 15/68

(54) **Autochanger**
Automatischer Wechsler
Chargeur automatique

(43) Date of publication of application: 18.11.1993
(73) Proprietor: Hewlett-Packard Limited, Bracknell, Berkshire RG12 1HN (GB)
(72) Inventor: Meikle, William Stewart, c/o Hewlett Packard Ltd., Bristol BS12 6QZ (GB); Dimond, Steven Andrew, c/o Hewlett Packard Ltd., Bristol BS12 6QZ (GB)
(74) Representative: Lawman, Matthew John Mitchell

(56) References cited:
- EP-A- 0 060 396
- EP-A- 0 310 427
- EP-A- 0 357 814
- WO-A-82/00732
- WO-A-88/08194
- FR-A- 2 578 676
- FR-A- 2 661 543
- US-A- 3 484 055
- US-A- 4 622 610
- US-A- 4 789 907

## Description

### Technical Field

The present invention relates to an autochanger for storing items of recording media and transferring these to and from a read/write mechanism. The specific embodiment which will be described relates to an autochanger for digital audio tapes. In this field various terms are used for tape autochangers including "stackers", "libraries", "loaders", "autochangers" and "changers".

### Brief Description of Prior Art

There are very many examples of known autochangers for tape cassettes of various kinds and also for other forms of media, such as disk. One example is described in EP-A-0197099 by the present applicant and discloses a tape autochanger in which tape cassettes are stacked in a fixed magazine and are transferred to and from a fixed tape drive mechanism by a cassette displacement mechanism which moves vertically along the stacked cassettes and horizontally between the magazine and the tape drive mechanism.

One example is the autochanger for tape cassettes disclosed in EP-A-0398199 (Mitsubishi) in which cassettes are mounted on a rotatable base which pivots to bring a selected cassette into engagement with a drive mechanism. In other embodiments described in that patent application, the drive mechanism is movable into contact with a selected cassette.

Another example is the autochanger described in EP-A-0 392620 (Laser Magnetic Storage) having a magazine storing tape cassette in a single vertical stack and a vertically movable elevator for transporting cassettes from the back of the magazine to a drive mechanism.

A further example is the tape autochanger described in EP-A-0467187 (Pierrat). The autochanger described stores cassettes on two decks with mechanical linkages for shunting the cassettes linearly along the decks from and to a pick up position where they can be picked up by a gripper which moves vertically and horizontally to transfer the cassettes between the storage area and a tape drive. A similar design of tape autochanger is described in US-A-5089920 (WangDAT).

A further example is the video cassette playback apparatus, described in European patent application EP-A-0 357 814, which can select and play one from a stored selection of video cassettes. In this apparatus, a plurality of video cassettes are held on a roundabout which rotates about an axis and a pestle pushes a selected video cassette, in a direction perpendicular to the axis, into a play back mechanism aligned with the motion of the pestle.

A still further example is the multiple miniature cassette tape player, described in European patent application EP-A-0 060 396, which stores four miniature cassettes on a turntable. The turntable has a hole in its base through which a tape aligned with the hole can pass into a playback mechanism.

### Summary of the invention

According to the present invention we provide
apparatus for storing items of recording media and for transferring media items to and from a mechanism for reading and/or writing to the media items, said apparatus comprising:
a storage area therein for storing a plurality of media items spaced around and along an axis of rotation of said media items;
means for rotating the stored media items as one body about said axis to permit access to any of the media items from one direction; and transfer means operable to collect media items from said one direction and to transfer media items between the storage area and said mechanism.

The present invention provides an autochanger which is able to be particularly compact whilst permitting easy access to the stored media items without the need for complicated mechanical assembles for moving the media items within the autochanger.

The present invention also has the significant advantage of allowing access to any of the media items from one direction.

An advantage of the ability to store a plurality of media items spaced along the axis is that a greater number of media items can be accommodated.

Preferably, the apparatus together with said mechanism is configured to fit within a standard peripheral form factor housing. This feature provides an autochanger having the considerable advantage of fitting within a standard peripheral form factor. Thus it can easily be built into a standard computer peripheral housing in a manner which is safe in that no parts protrude or are exposed and which is also aesthetically pleasing. By standard peripheral form factor is meant the peripheral form factors which are de-facto standards or official standards and are widely recognised as such. Examples of standard peripheral form factors are 8", 5 1/4" and 3 1/2" form factors. In the embodiment to be described, the autochanger holds DAT cassettes and fits within a standard 5 1/4inch peripheral form factor.

Preferably, the apparatus is adapted to receive a magazine carrying media items and the means to rotate is operable to rotate the magazine. This allows several tape cassettes to be loaded or unloaded from the autochanger at one time. In the embodiment to be described there is a toothed drive wheel for engaging teeth on the magazine to help retract and eject the magazine.

Media items, such as DAT cassettes, may be stored in two stacks equally spaced around said axis of rotation. The stored media items need to be rotated through 180° to achieve access to all of them from one direction. Alternatively, the media items may be stored in staggered formation spaced around said axis of rotation eg. so that rotations of 90° are required to achieve access to all of the media items from one direction. In the embodiments to be described, the autochanger can store up to six DAT cassettes.

The means for rotating the media items may comprise a turntable, which may be mounted on the underside of the top plate of a housing for the apparatus so as to be rotatable to and fro through 180°.

The transfer means may comprise a platform configured to transport a media item between the storage area and the mechanism and a picker device which is movable relative to the platform to move media items onto and off the platform. Preferably, the picker device comprises opposed picker fingers for engaging notches in the side edges of a media item. In the embodiment to be described, the picker fingers are biassed inwardly and the apparatus comprises means for automatically deflecting the picker fingers outwardly. In that embodiment the picker fingers are pivotably mounted and the deflecting means comprises two rods movable in the same direction by a deflecting member so that each rod abuts one of the picker fingers and deflects it outwardly. In this way, only one deflecting member is required to open the two picker fingers.

Apparatus of the present invention may comprise means for moving the transfer means between the storage area and the mechanism in the form of a slidable plate having a cam which co-operates with the transfer means and is profiled so that horizontal sliding of the plate causes vertical movement of the transfer means. Preferably, the cam is stepped in shape so as to define plurality of vertical positions for the transfer means. The cam may be in the form of a groove engaged by a connecting pin on the transfer means. For added stability the apparatus preferably also comprises vertical guide means positioned adjacent the cam for guiding the vertical movement of the transfer means. The vertical guide means may be a fixed plate having a vertical groove providing the vertical guide means.

In the embodiment to be described the first slidable plate is positioned on one side of the apparatus and a second slidable plate positioned on the opposite side of the apparatus and interconnected to the first slidable plate so that sliding movement of one of the slidable plates causes the other slidable plate to slide in the opposite direction. The first and second slidable plates may be interconnected by a pivotably mounted arm. The second slidable plate may comprise a cam oppositely profiled to the cam of the first slidable plate and which also co-operates with the transfer means. This provides a stable arrangement for lifting and lowering the platform supported on both sides.

There is a door in the apparatus for enabling media items to be inserted and ejected. In the embodiment to be described, a first sliding movement of at least one of the slidable plates effects opening of a door in the apparatus for receiving media items, and a second sliding movement of at least one of the slidable plates also effects locking of the door. This arrangement has the advantage of reducing the number of components used in the apparatus.

In the preferred embodiment to be described, the apparatus comprises a generally elongate housing, wherein:
the mechanism is positioned at the base and rear of the housing and has an opening facing forwardly in the housing for receiving media items;
the storage area for storing media items is located above the mechanism such that the
axis of rotation passes through the mechanism; and
the transfer means, for transporting media items between the storage area and the mechanism, is positioned at the front of the housing and is configured for movement, between the storage area and the mechanism, parallel to the axis of rotation.

In the description and in the claims, the terms vertical, horizontal, and the like are used for descriptive purposes. However, it is understood that the embodiment of the invention described here is capable of operation in any orientation and the terms so used are only for the purpose of describing relative positions and are interchangeable under appropriate circumstances. For example, the tape cassettes are described as being held as two vertical stacks in the magazine. The autochanger may be used on its side in which case the terms vertical and horizontal need to be interchanged.

### Brief Description of the Drawings

Specific embodiments of the present invention will now be decribed, by way of example, with reference to the accompanying drawings:
Figure 1 is a perspective view of an autochanger according to the present invention;
Figure 2 is a front perspective view of the autochanger of Figure 1 showing some of the internal components;
Figure 3 is a front perspective view of the drive mechanism of the autochanger with a DAT cassette loaded;
Figure 4 is a rear perspective view of the drive mechanism;
Figure 5 is a schematic diagram of a host computer connected to an autochanger of the present invention.
Figure 6 is a perspective view of a first embodiment of magazine for holding tape cassettes;
Figure 7 is a perspective view of an alternative embodiment of magazine.
Figure 8 is a perspective view of the underside of the top plate of the autochanger housing showing the turntable;
Figure 9 is a view similar to Figure 8 and showing a magazine in place on the turntable;
Figure 10 is a perspective view of the platform of the tape transfer mechanism;
Figure 11 is a perspective view of a picker device for moving tape cassettes relative to the platform of Figure 10;
Figure 12 is a perspective view of a connecting rod for operating picker fingers on the picker device of Figure 11;
Figure 13 is a perspective view of a lever which is a part of the tape transfer mechanism shown in Figure 2.
Figure 14 is a perspective view showing a door locking arrangement;
Figure 15 is a controller block diagram of the autochanger of the present invention.

### Description of the Invention

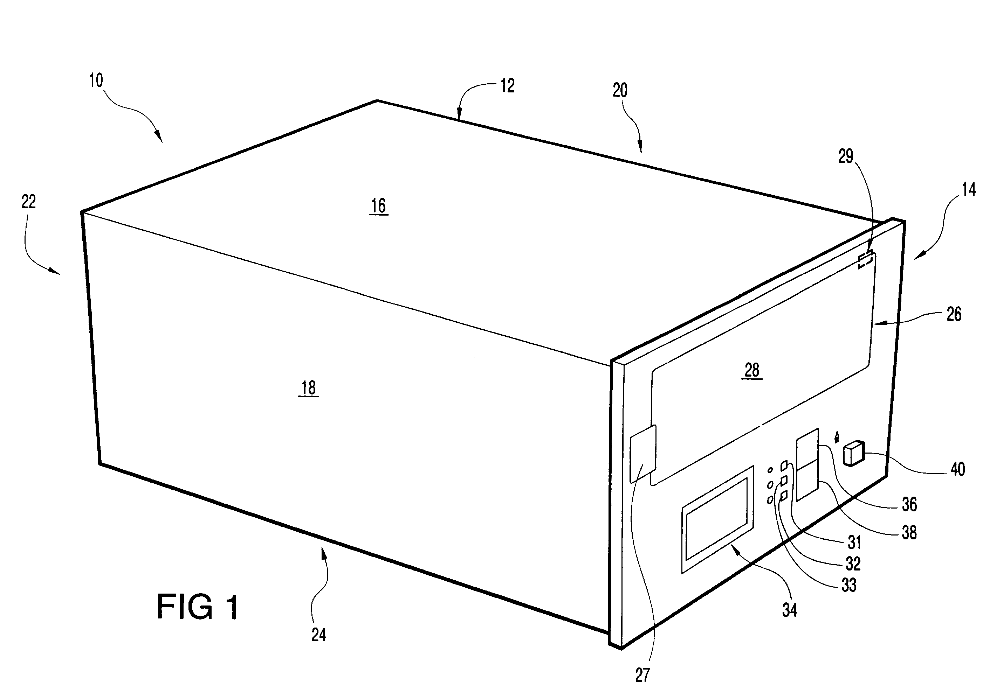

Referring to Figure 1, an autochanger indicated generally at 10 comprises a housing 12 and a front panel 14. The autochanger 10 is configured as a standard 5 1/4 inch form factor size. The housing 12 is rectangular in cross section and has a top panel 16, side panels 18 and 20, a rear panel 22 and a base panel 24. The front panel 14 comprises a slot 26 closable by a spring biased door 28 which pivots about a bottom hinge. The slot 26 enables a magazine to be inserted and removed from the autochanger 10. There is an internal sensor 29 (shown dotted) which detects when the door 28 is opened. The door 28 is lockable as will be described. A keying member 27 is mounted on the front panel 14 so as to overlap the slot 26. The keying member 27 is set into recesses in the front panel 14 and the door 28 so as to maintain a flush surface. The purpose of the keying member is to ensure correct orientation of a magazine as will be described.

The front panel 14 comprises a set of three LEDs 31-33 each of which is accompanied by an explanatory symbol. The top LED 31 indicates when there is some activity concerning a magazine such as loading or unloading. The middle LED 32 denotes data-related activity, such as when data is being read from or written to a tape by the drive mechanism. The lower LED 33 is a warning light denoting a problem with the apparatus. The LEDs are designed to be seen by user from a distance.

For more detailed information, a liquid crystal display (LCD) 34 is provided. The LCD 34 displays the following information:
i) which tape slots in the magazine were occupied by tape cassettes when the magazine was loaded;
ii) which of those tape cassettes is currently in the drive mechanism;
iii) whether the tape cassette in the drive mechanism is write-protected;
iv) whether data compression/decompression is being employed in writing/reading data to/from the tape cassette in the drive mechanism;
v) how much of the current tape has been read/written;
vi) a line of message text.

The front panel 14 also comprises three buttons 36, 38 and 40, each with an adjacent explanatory symbol. Button 36 enables the user to select a specific tape cassette. Pressing the button 36 causes the LCD 34 cyclically to display the options according to which tape cassettes are present in a loaded magazine and pressing it again selects a particular tape cassette. Pressing the button 38 causes a selected tape cassette automatically to be loaded into the drive mechanism. Button 40 causes the magazine to be ejected.

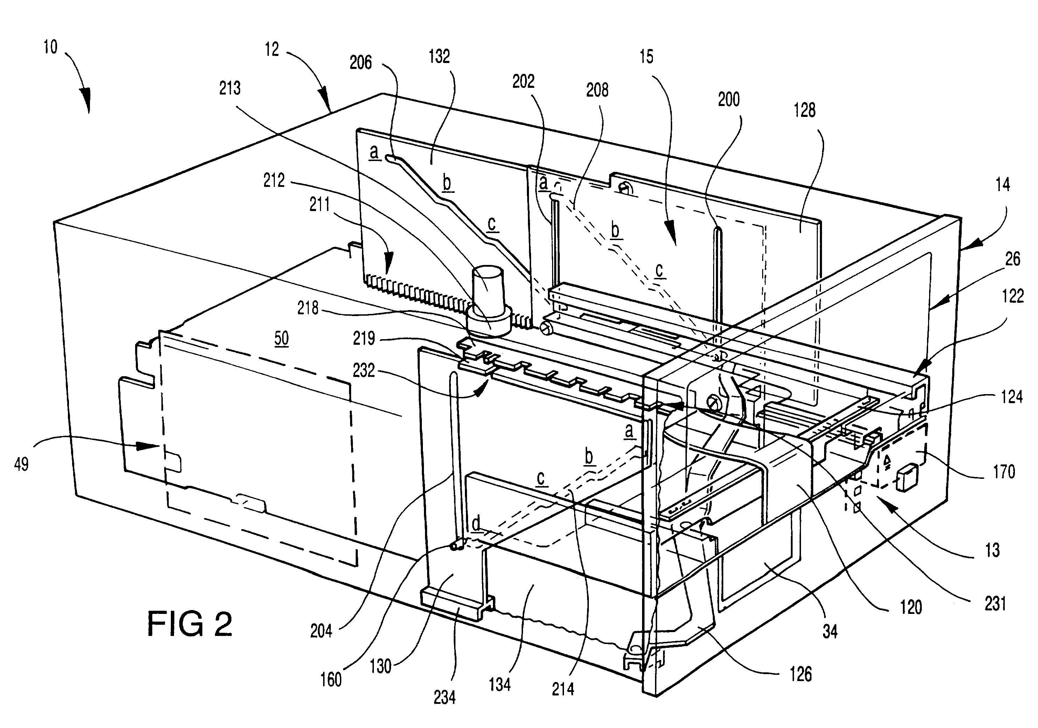

Referring to Figure 2, the housing 12 is shown in outline only and the front panel 14 is shown cut away underneath the slot 26 to reveal some of the internal components of the autochanger 10. At the base of the rear of the housing 12 the outline of a tape drive mechanism 50 is shown. The tape drive mechanism 50 is a 3 1/2 inch form factor size and comprises a known mechanism which will not be described in detail here. The drive mechanism 50 may be able to read and write compressed data. For example, the tape drive mechanism 50 could be that used in existing Hewlett-Packard product number HP35480, minus parts of the standard housing for that product. At the front of the housing 12 is a transfer mechanism 13 for transferring tape cassettes from a storage position to the tape drive mechanism 50. The transfer mechanism 13 comprises several components and will be described in detail below. In the upper part of the housing 12 is a storage area 15 for receiving a magazine containing up to six tape cassettes and which also comprises means for rotating the magazine as will be described in detail below. Also housed along one side of the housing 12 is a printed circuit board 49 (shown in outline only) for controlling the operation of the autochanger 10. It will be understood that the number and size of printed circuit boards used in an autochanger is a matter of design choice. For example, a separate printed circuit board could be associated with the switches and indicators on the front panel 14.

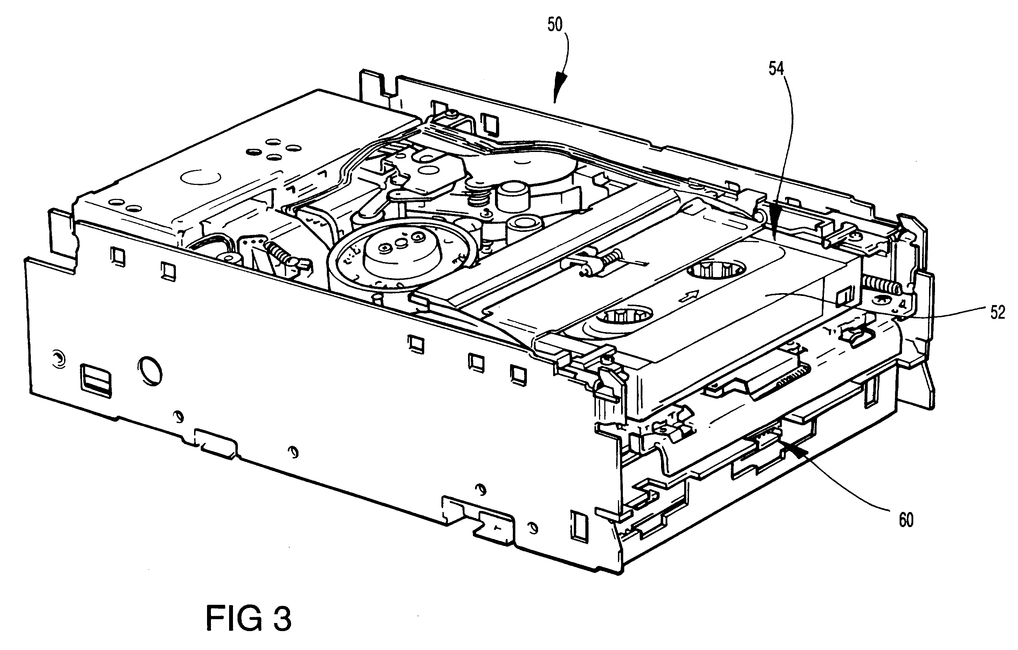

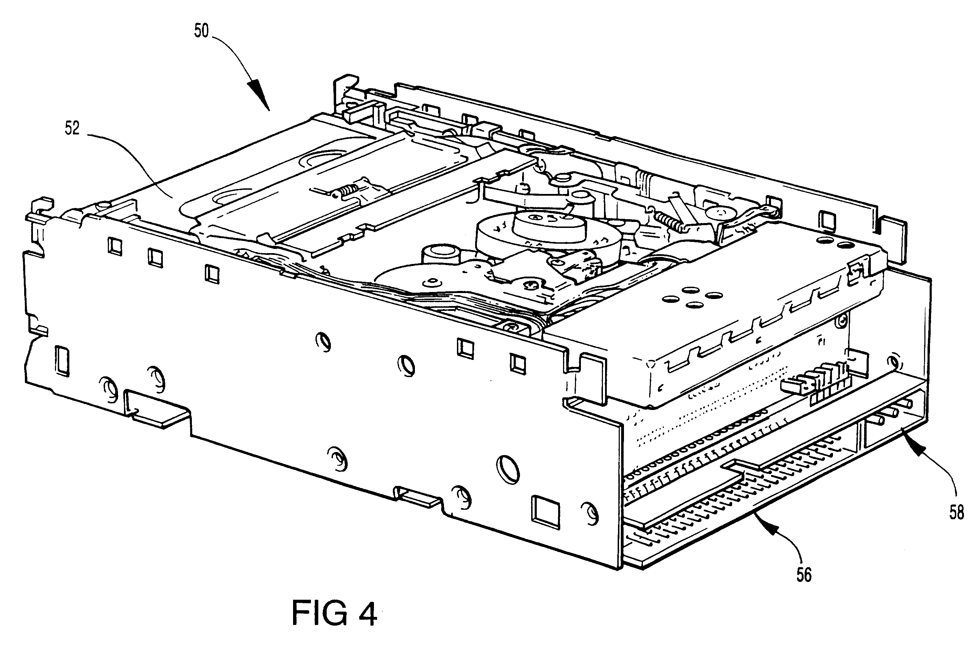

Referring to Figures 3 and 4, the drive mechanism 50 is shown holding a digital audio tape (DAT) cassette 52. The upper front part of the drive mechanism housing has a cut-away 54 to provide for a tape cassette being lowered slightly within the length of the drive housing. The rear of the drive mechanism, shown in Figure 4, provides the necessary connections for power and control signals to the drive mechanism. A socket 56 is for a control connection and a socket 58 is for connecting a power lead to the drive mechanism 50. The sockets 56 and 58 are exposed in the rear panel 22 of the housing 12. This is one advantage of positioning the drive mechanism 50 at the rear of the autochanger 10. Positioning the drive mechanism at the bottom of the autochanger 10 has the advantage of facilitating access to configuration switches (not shown) provided in the base of the drive mechanism. An aperture is provided in the base panel 24 of the autochanger 10 to permit access to these configuration switches. The rear panel 22 also comprises a second power socket for the autochanger and language switches to permit selection of the language in which messages in the LCD 34 appear. The drive mechanism 50 comprises a socket 60 at the front for permitting control signals to be tranferred between the firmware of the drive mechanism 50 and the printed circuit board 49 of the autochanger 10.

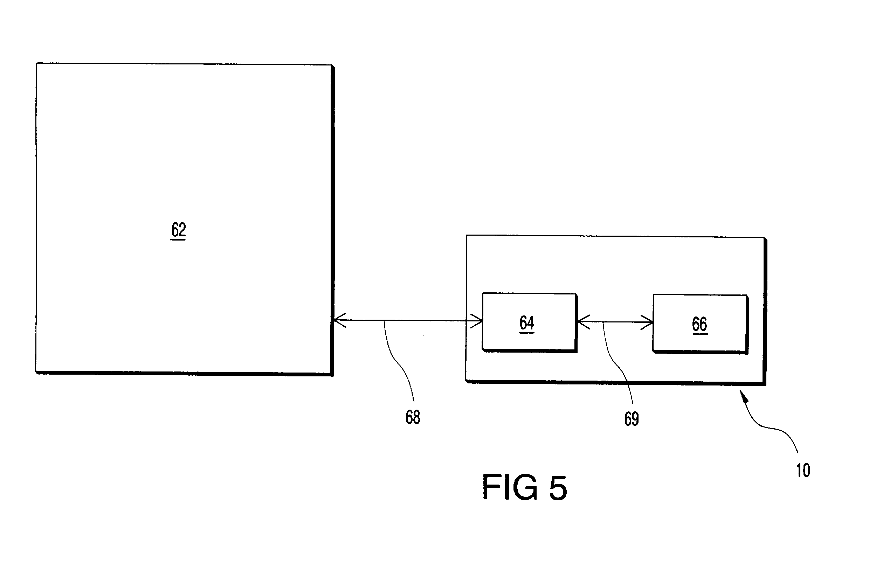

Figure 5 shows schematically the components of a system utilising the autochanger 10. A host computer 62 passes control signals to the firmware 64 of the drive mechanism which interprets these and transfers control signals as appropriate to the controller 66 of the autochanger 10, and vice-versa.. The interface 68 is a SCSI interface specifically Small Computer Systems Interface, SCSI, as per draft proposed American National Standard X3T9.2/86-109 Revision 10. The design of the interface 69 is largely dictated by the specific drive mechanism used and is within the ability of the average person skilled in the art of such interface design.

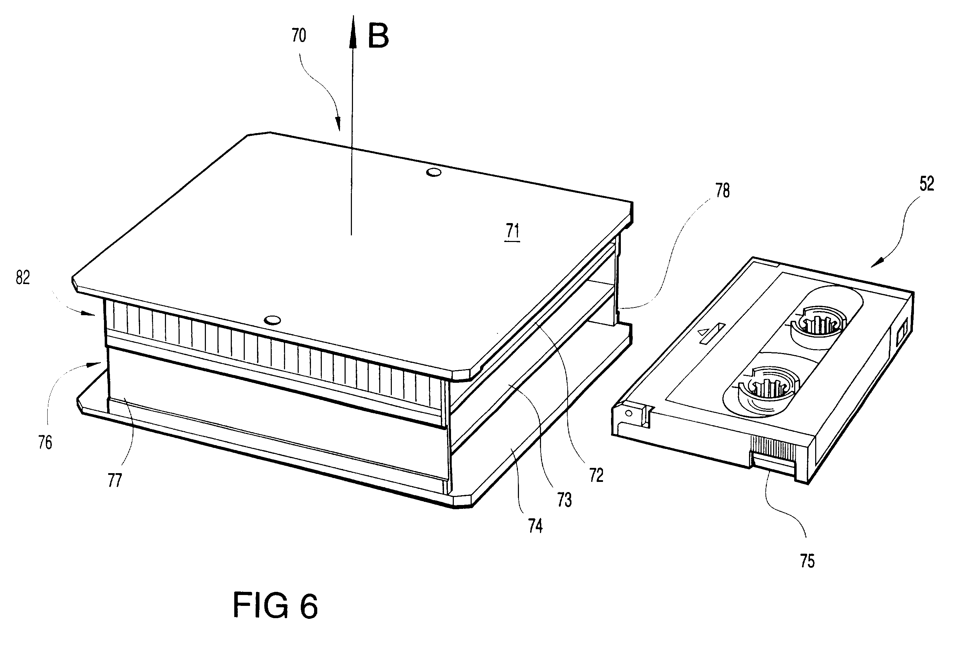

Referring to Figure 6, a magazine 70 made from moulded plastics comprises six slots, three at each end, each configured to receive and retain a DAT cassette 52. The DAT cassette has a notch 75 on each side edge, which notches are used in removing the DAT cassette from the magazine 70 as will be described hereinafter. The magazine 70 comprises four generally rectangular plates 71-74 which are supported in an equally spaced manner by side pieces 76 and 78. The side piece 76 has a toothed section 82 on its upper part which extends the length of the magazine 70. The side piece 76 has a recess 77 running along its full length. The recess 77 co-operates with the keying member (Figure 1) when the magazine is correctly inserted. The slots for receiving DAT cassettes are each provided with retaining means (not shown) which retain a DAT cassette in a secure manner and which co-operate with the contours of the shell of a DAT cassette in order to prevent insertion of the cassette in an incorrect orientation. There are a variety of known ways of providing such retaining means eg. ridges, flexible tongues etc.

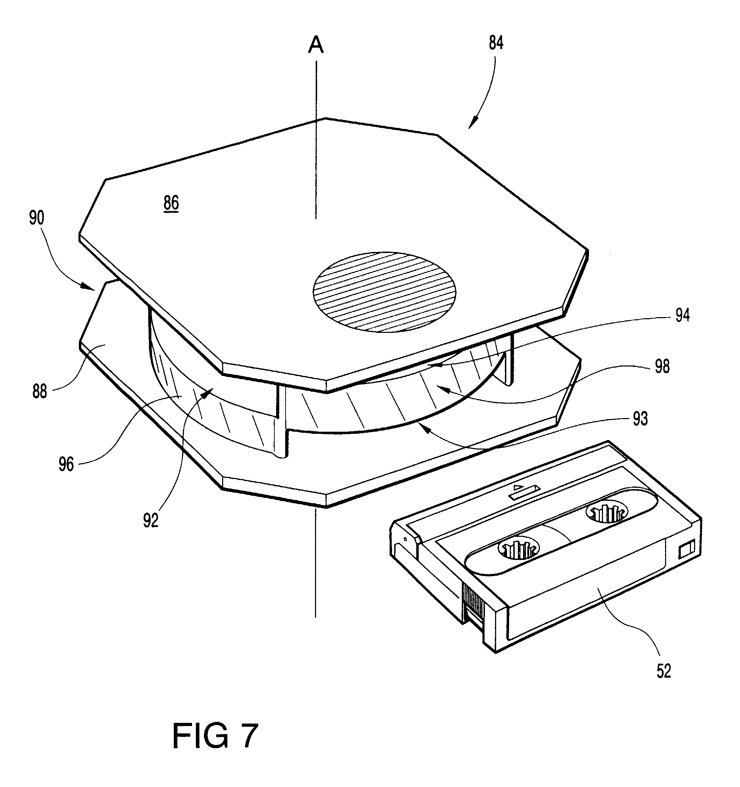

Figure 7 shows an alternative magazine 84 which is made of moulded plastics material and configured to hold DAT cassettes in staggered formation spaced around a central axis of rotation A. A DAT cassette 52 is also shown. The magazine 84 comprises top and bottom plates 86 and 88 and a structure 90 defining tape storage slots sandwiched therebetween. On two opposed sides of the magazine 84 there are single central slots, slot 92 being shown in Figure 7. On the remaining two opposed sides of the magazine 84, there are two spaced slots, which on one side are referenced 93 and 94 in Figure 7. The upper slot 94 on that side is aligned above the slot 93 and, heightwise, is located above the slot 92. Supporting walls eg. 96 and 98, are located adjacent each of the slots. All of the six slots are configured to retain a DAT cassette securely and to prevent insertion of a DAT cassette in an incorrect orientation.

The magazine 84 is thus configured to hold six DAT cassettes - two each on two opposed sides and one each on the remaining two opposed sides. In order for there to be access to any DAT cassette from a single direction the magazine 84 needs to be rotatable through successive quarter turns.

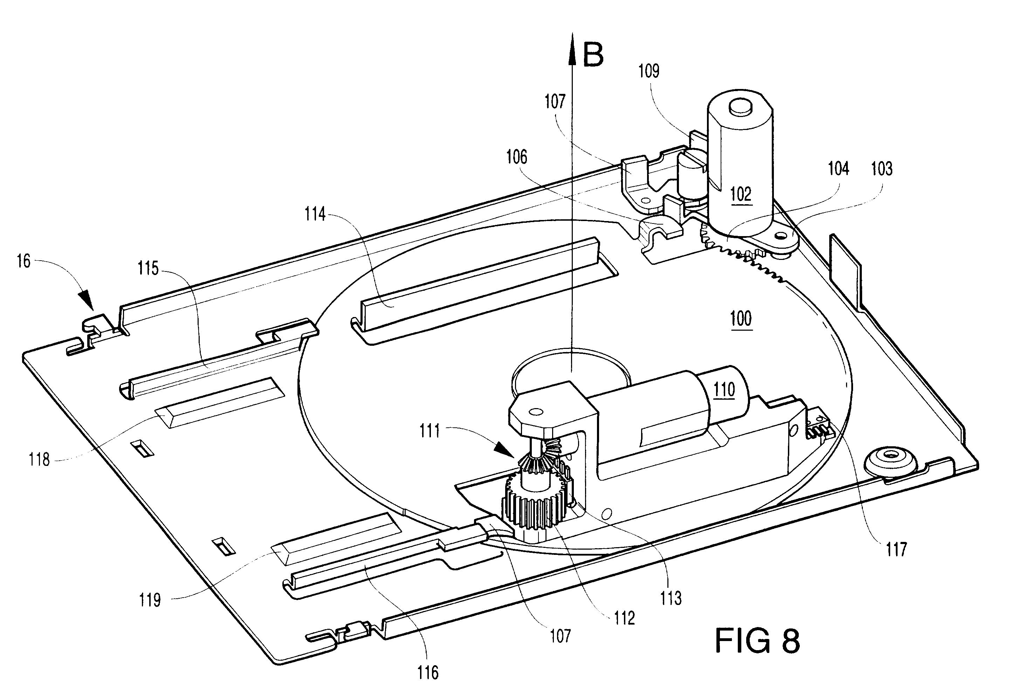

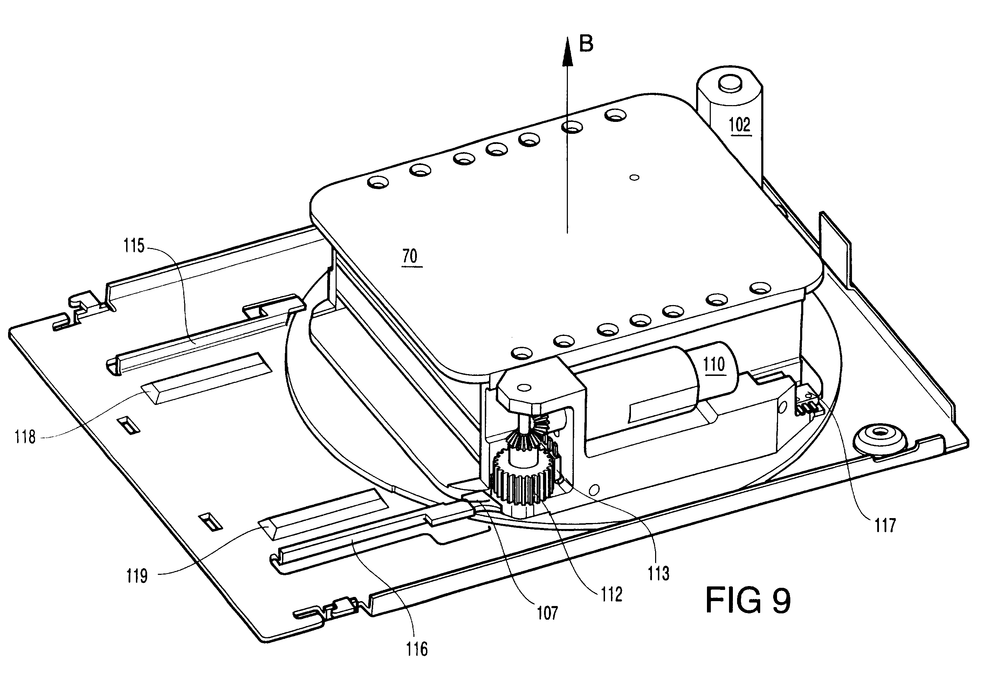

Figure 8 shows the underside of the top plate 16 of the housing 12 which is fitted with a turntable 100 provided with teeth around half of its periphery (only some teeth are actually illustrated). In other words, when assembled, the turntable 100 is at the top part of the autochanger 10. A motor 102 supported on a mounting block 103 is operable to rotate the turntable 100 about an axis B by means of a drive wheel 104 driven directly by the motor 102 which engages with the teeth of the turntable 100. The turntable is rotatable through 180°. The turntable 100 has two flags 106 and 107 spaced by 180°. The flags 106 and 107 are configured to deflect a pivot arm 109 which operates a microswitch 108. In this way the angular position of the turntable 100 can be detected. On the nearside of the plate 16 in Figure 8 is a second motor 110 operable to drive a drive wheel 112, via bevel gears 111, which engages with the toothed section 82 of the magazine 70 for drawing the magazine 70 into the autochanger 10. The motor 110 is activated in response to a signal from a sensor 113 indicating that the toothed part 82 of the magazine 70 is in engagement with the drive wheel 112. There is also a sensor 117 associated with the turntable 100 for detecting when the magazine 70 is fully inserted onto the turntable 100, as shown in Figure 9, so as to deactivate the motor 110. The sensors 113 and 117 each have deflectable arms (not shown) which protrude into the path of the magazine 70. There is a side stop 114 mounted on the turntable 100 which, together with the inner side of the mounting block 103, helps to guide the magazine 70 into position on the turntable 100. Also provided are two side stops 115 and 116 on the underside of the top plate 16 to help guide the magazine 70. Protrusions 118 and 119 keep the magazine 70 clear of the plate 16 during insertion so as to clear the edge of the turntable 100 and these also help to keep the magazine 70 appropriately positioned during ejection. Once fully inserted, the magazine 70 is supported on the lid of the drive mechanism 50.

The mechanism for tranferring tape cassettes between the magazine 70 and the tape drive mechanism 50 will now be described.

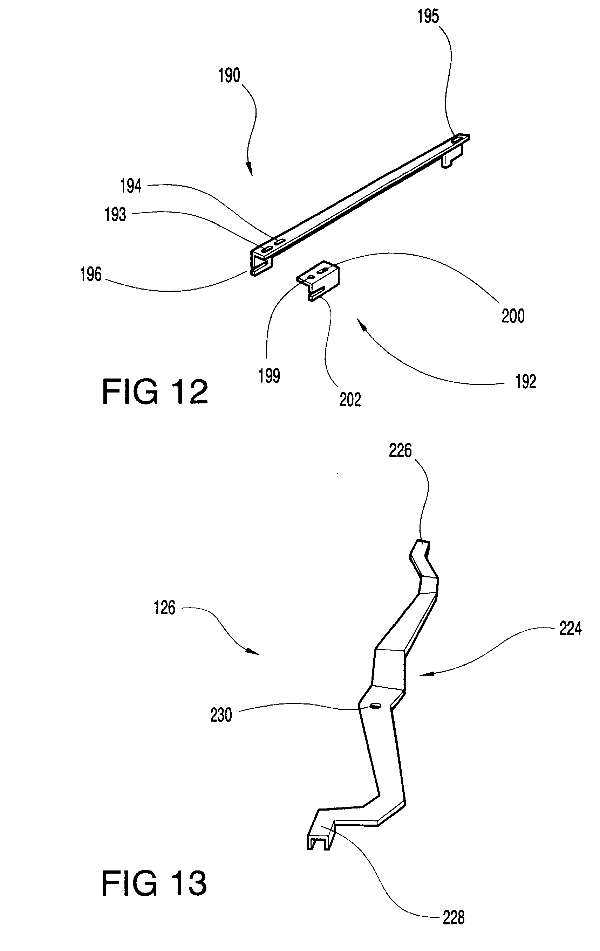

Referring to Figure 2, the cassette transfer mechanism 13 comprises the following components:
a vertically movable platform 120;
a picker device 122;
solenoid - actuated rods, one of which is shown separately in Figure 2 referenced 124;
a lever arm, which is shown separately in Figure 13 referenced 126;
two fixed plates 128 and 130 and two slidable plates 132 and 134.

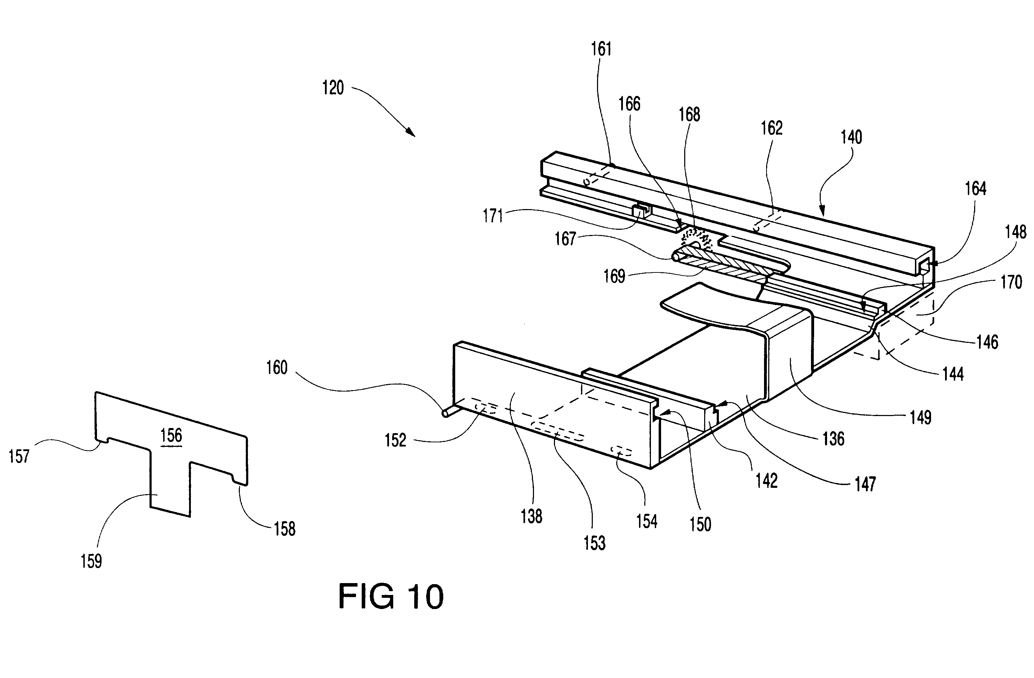

The platform 120 is shown in Figure 10 and is made from metal coated with a low friction plastics material. The platform 120 comprises a base 136 and side pieces 138 and 140. The base 136 comprises a first guide block 142 and a stepped portion 144 leading to a second guide block 146 which, together with the first guide block 142, defines a receiving area for a DAT cassette 52. Each of the guide blocks 142 and 146 is recessed to provide a ledge, 147 and 148 respectively for supporting the side edges of a DAT cassette. There is an upstanding L-shaped spring clip 149 which, in use, bears down on the DAT cassette to help retain it securely.

The side piece 138 has a channel 150 formed therein. In the base 136, adjacent the side piece 138, are three holes 152-4. These holes are for receiving parts of a T-shaped plate 156 which is also shown in Figure 10. The plate 156 has lugs 157 and 158 which slot into the holes 152 and 154 and the base 159 of the plate 156 slots into hole 153 so as pivotally to mount the plate 156 on the platform 120. The purpose of the plate 156 will be described below. A connecting pin 160 protrudes sideways beyond the side piece 138 from the underside of the base 136 of the platform 120. There are two similar connecting pins 161 and 162 (shown dotted) which protrude outwardly beyond the side piece 140 on the other side of the platform 120.

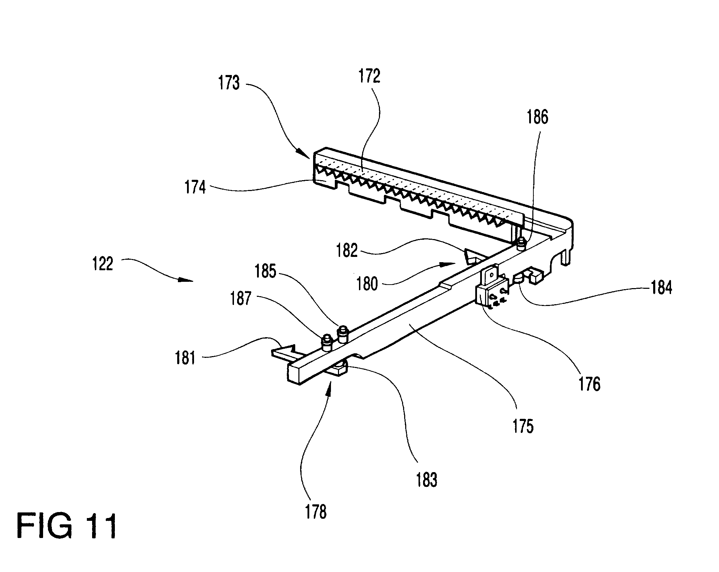

The other side piece 140 of the platform 120 is configured to provide a square section channel 164 extending along the length of that side of the base 136. That side of the base 136 extends longitudinally underneath the length of the side piece 140 and comprises a notch 166. The purpose of the notch 166 is to permit a drive wheel 168 (shown dotted) to protrude through so as to engage the picker device 122 of Figure 11. The drive wheel 168 is driven by a motor 170 attached to the underside of the platform 120. The motor 170 drives a belt 169 which drives a spigot 167 attached to the toothed drive wheel 168. The side piece 140 also comprises a C-shaped sensor 171 which detects the position of the picker device 122 to control the motor 170 accordingly as will be described.

The picker device 122 is shown separately in Figure 11 and is a metal component coated with a low-friction plastics material and is generally L-shaped. It has a side arm 172 shaped to fit slidably within the channel 164 defined by the side portion 140 of the platform 120, as shown in Figure 2. The underside of the side arm 172 is shaped to provide a rack 173 (shown dashed) to permit the side arm 172 to be moved slidably within the channel 164 by the motor 170. The side arm 172 has a notched skirt 174 depending therefrom and the notches are detectable by the sensor 171 on the side piece 140 of the platform 120 to provide information concerning the position of the picker device 122 on the platform 120. A front arm 175 of the picker device 122 extends across the width of the base 140 of the platform 120 and comprises a sensor switch device 176 which has a mechanical microswitch extending forwardly through the front arm 175 so as to detect when a DAT cassette is abutting the front arm 175. There are two picker fingers 178 and 180 pivotally mounted on the front arm 175. Each of the picker fingers 178, 180 has a generally triangular head 181, 182 designed to engage in notches on the sides of a DAT cassette. Each of the picker fingers 178, 180 is spring-biassed inwardly by means of a torsion spring around their respective pivot mountings 183 and 184. This feature has the advantage of enabling the picker device 122 positively to grip a DAT cassette as will be described. There are pins 185 and 186 forming part of the mountings for the picker fingers 178, 180 and one further pin 187 on the front arm 175.

The rods 190 and 192 of Figure 12 form part of a mechanism for disengaging the picker fingers 178 and 180 from a DAT cassette. The longer rod 190 is L-shaped in section and comprises three slots 193, 194 and 195 which fit over the pins 185,186 and 187 on the front arm 175. The rod 190 has a finger 196 for receiving a compression spring. The shorter rod 192 is also L-shaped in section, comprises two slots 199, 200 which fit over the pins 185 and 187 and has a finger 202 also for receiving a compression spring. The slots 193, 194, 195, 199 and 200 in the rods 190 and 192 are large enough to allow the rods 190 and 192 to slide a small distance relative to the front arm 175 of the picker device 122. When assembled, the horizontal parts of the rods 190 and 192 sit on the front arm 175 of the picker device 122 with their vertical parts positioned on opposite sides of the front arm 175. In its normal position, the upper part of the pivotable plate 156 abuts the two compression springs on the fingers 196 and 202. The far end of the rod 190 is adjacent the head 182 of the picker finger 180 and the far end of the rod 192 is adjacent the mounted end of the picker finger 178 ie. behind the pivot point.

On actuation of a solenoid (not shown) mounted on the underside of the platform 120, the base 159 of the plate 156 is deflected outwardly causing the plate 156 to pivot so that its upper part compresses the springs on the fingers 196 and 202 and moves the rods 190 and 192 a small distance relative to the front arm 175 of the picker device 122. This causes the far end of the rod 190 to abut the picker finger 180 adjacent the head 182 thereof thereby pivoting it outwardly. The rod 192 moves the end of the picker finger 178 remote from the head 181, thereby also pivoting that finger outwardly. In this way, actuation of the solenoid causes the picker fingers 178 and 180 to splay outwardly eg., to release their hold on a DAT cassette. The arrangement is such that the picker fingers 178 and 180 splay outwardly whenever the solenoid is actuated, whatever is the horizontal position of the picker device 122 relative to the platform 120. This arrangement for deflecting the picker fingers 178 and 180 is advantageous in that it permits the solenoid to be mounted on the platform 120, rather than on the picker device 122, so that the solenoid and associated wiring does not have to be moved horizontally. It uses a single member, the plate 156, for effecting the movement of both of the picker fingers 178 and 180 thereby saving on parts.

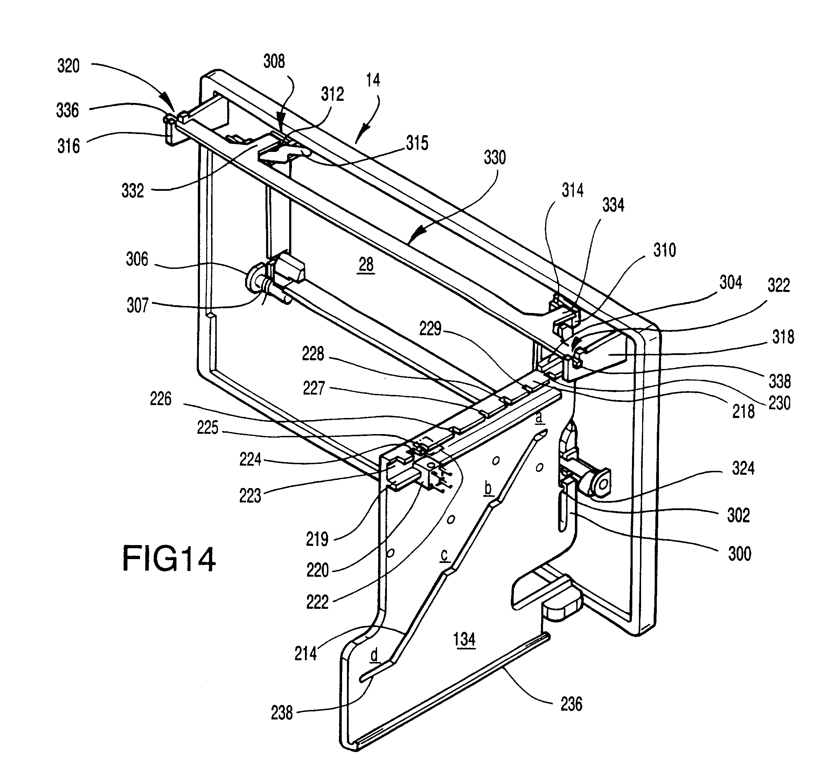

Referring to Figure 2, attached to the sides 18 and 20 of the housing 12 of the autochanger 10 are fixed plates 128 and 130. The plate 128 comprises two vertical slots 200 and 202 into which engage the connecting pins 161 and 162 on the platform 120. The plate 130 has a single vertically extending slot 204 in which engages the connecting pin 160 on the platform 120. The plate 130 is cut away to form a generally triangular shape, simply to reduce weight. Adjacent to and outside the plate 128 is a slidable plate 132 which comprises two parallel staircase grooves 206 and 208 which define four vertical positions a,b,c and d for the platform 120. A rack 211 is provided at the base of the plate 132 and this is engaged by a drive wheel 212 driven directly by a motor 213 positioned at the base of the far rear corner of the housing 12. Another slidable plate 134 is positioned adjacent and inside the fixed plate 130 on the other side of the autochanger 10. The slidable plate 134 comprises a single staircase groove 214 which is oriented oppositely to the staircase grooves 206 and 208 but which also defines the same four vertically-spaced positions a,b,c, and d for the platform 120. The top part of the slidable plate 134 has two parallel flanges 218 and 219 which are notched. The flange 218 comprises nine notches 223-231 and these (apart from notch 231 which is obscured) can also be seen in Figure 14 which shows full details of the slidable plate 134. In figure 2 the forward and bottom edges of the slidable plate 134 are not shown in any detail. There are two C-section optical sensors 220 and 222 mounted in parallel on the printed circuit board 49 and positioned to detect the passage of the flanges 218 and 219 as the plate 134 slides. The sensor 220 is shown in detail in Figure 14. The position of the sensor 222, which is the same type as the sensor 220, is shown dotted. The flange 219 has a single notch 232 which defines the parked position of the platform 120. The notch 232 is obscured by the sensor 220 in Figure 14. The notches 223-231 in the flange 218 define the following positions of the platform 120 and states of the door 28 as will be explained:
- notch 223: platform parked (position d); door open
- notch 224: platform parked (position d); door unlocked
- notch 225: platform parked (position d); door locked
- notch 226: platform moving between positions d and c; door locked
- notch 227: platform in position c; door locked
- notch 228 platform moving between positions c and b; door locked
- notch 229: platform in position b; door locked
- notch 230: platform moving between positions b and a; door locked
- notch 231: platform in position a; door locked

Thus the sensors 220 and 222 can be used to control the motor 213 and hence the height of the platform 120.

The plates 130 and 134 are slidably engaged at their bottom edges. The bottom edge of the fixed plate 130 is configured to provide a downwardly facing channel member 234 (Figure 2) into which slidably fits an upturned lower edge 236 of the slidable plate 134 (Figure 14).

The lever arm 126, which is shown individually in Figure 13, is made of steel. The lever arm 126 is stepped at 224 and has profiled ends 226 and 228 designed for attachment to the lower front edges of the slidable plates 132 and 134 as shown in Figure 2. The lever arm 126 is pivotably attached to the base panel 24 of the housing 12 at a pivot point 230. When the motor 213 causes the plate 132 to slide, this causes the lever arm 126 to pivot so as to cause the slidable plate 134 to slide simultaneously in the opposite direction. As will be appreciated, the sliding of the plates 132 and 134 means that the staircase grooves 206, 208 and 214 force the connecting pins 160, 161 and 162 to ride upwardly in the vertical slots 200, 202 and 204. The sliding movement of the slidable plates 132 and 134 is controlled using the sensors 220 and 222 so that the platform 120 is moved vertically to the desired one of the four possible positions a,b,c,d defined by the staircase grooves 206, 208 and 214.

It is the movement of the plate 134 which also controls the locking, unlocking and opening of the door 28 in the front panel 14 of the housing 12. Referring to Figure 14 the lowermost parts of the staircase grooves 206, 208 and 214 each have a horizontal portion 238 allowing some sliding of the plates 132 and 134 without disturbing the platform 120 from is parked position. There is a locking member which fits over the inside of the top of the door 28 and which, in its rest position, locks the door 28. The locking member is designed so that when the plate 134 moves forward whilst the platform 120 is in the parked position, the plate 134 lifts the locking member so as to unlock the door. Further forward movement of the plate 134 causes the door 28 automatically to open.

Figure 14 shows the slidable plate 134 and the front panel 14. The plate 134 comprises a flexible arm 300 which can flex onto and away from a stop 302. The uppermost forward corner of the plate 134 comprises a cam 304.

The door 28 in the front panel 14 opens inwardly and closes about a hinge 306. The door 28 is biassed shut by a torsion spring 307 on the hinge 306. Attached to the inside top part of the door 28 are blocks 308 and 310 which each define a rearward facing ledge 312 and 314. A lever 315 is deflected on opening of the door 28 and activates the sensor 29 mentioned previously with reference to Figure 1. Either side of the door 28 and mounted on the inside of the front panel 14 are supports 316 and 318 which define upwardly facing slots 320 and 322. The hinge 306 extends sideways to beyond the flexible arm 300 and carries a cam lobe 324.

The elongate locking member 330 has feet 332 and 334 which rest on the ledges 312 and 314 of the blocks 308 and 310. At the ends of the locking member 330 are lugs 336 and 338 which rest in the slots 320 and 322 of the supports 316 and 318. In the position shown in Figure 14 the front of the locking member 330 is angled downwardly so that the feet 332 and 334 are lower than the main body of the locking member 330.

In the position shown in Figure 14 the door 28 is locked because any attempt to push the top of the door 28 inwardly will be prevented by the locking member 330. Forward movement of the plate 134 causes the cam 304 to engage the underside of the right hand end of the locking member 330 causing it to pivot about the lugs 336 and 338 so that the feet 332 and 334 lift up off the ledges 312 and 314 thus permitting opening of the door 28. Further forward movement of the plate 134 causes the flexible arm 300 to engage the cam lobe 324 and turn it downwardly thereby opening the door 28. The flexible arm 300 flexes back against the stop 302 when the door 28 is open.

Reversing the movement of the plate 134 takes the flexible arm 300 out of engagement with the cam lobe 324 thereby allowing the door to close by the force of the spring 307. Further rearward movement of the plate 134 takes the cam 304 out of engagement with the underside of the locking member 330 thereby allowing it to pivot back under gravity to the locking position shown in Figure 14.

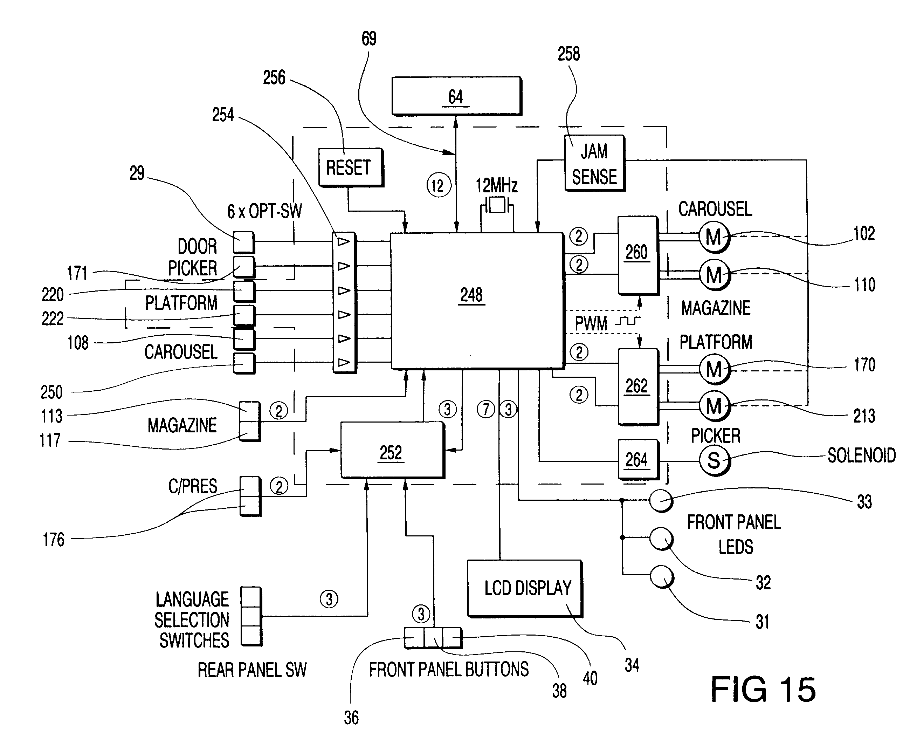

Figure 15 is a controller block diagram for the autochanger of the present invention. A microprocessor 248 receives signals from the various sensors and switches and controls the various motors accordingly. The numbers on the connecting lines in Figure 15 indicate the number of signal channels for the connection. The microprocessor 248 communicates with the firmware 64 of the tape drive mechanism 50 via an interface 69. The components are labelled with the reference numbers used for them in the preceding description. Item 250 is a spare sensor for detecting the angular position of the turntable 100. The components which are mounted on the printed circuit board are indicated with the dashed lines in Figure 15. These comprise:
the microprocessor 248;
the sensors 220 and 222;
an eight to one selector 252 for sequentially supplying signals to the microprocessor 248 from the eight switches connected to it ;
amplifiers 254;
a reset circuit 256;
a jam detection circuit 258 which senses when a motor is jammed;
motor drivers 260 and 262;
a solenoid drive transistor 264.

The operation of an autochanger according to the present invention will now be described in the context of backing-up data from a host computer. The autochanger 10 can be used in automatic mode in which case all of its commands come from the host computer and the user interacts with the host computer to control the back-up operation. Of course the host computer may be programmed to execute a back-up operation automatically without user intervention. Alternatively, the autochanger can be used in manual mode in which a user utilises the buttons on the front panel 14 as shown in Figure 1. It is manual mode, which will now be described.

Prior to insertion of a magazine, the door 28 of the autochanger is closed but unlocked ie. the plate 134 is positioned so that the notch 224 is aligned with the sensor 222.

Initially, the user loads the magazine 70 with six DAT cassettes and inserts the magazine 70 through the door 28 of the front panel 14 of the autochanger 10. The DAT cassettes are notionally numbered according to their position in the magazine 70 with numbers one to three being positioned from top to bottom of the rear of the magazine 70, ie. the part of the magazine 70 which is first inserted in the autochanger, and numbers four to six being positioned from top to bottom of the front of the magazine. Opening of the door 28 is sensed by sensor 29 which primes the system to get ready for insertion of the magazine 70. At this stage the plate 134 is positioned so that the door 28 is unlocked. Once the magazine 70 is inserted far enough to trigger the sensor 113 this activates the motor 110 which causes the drive wheel 112 to rotate and, in engagement with the toothed section 82 of the magazine 70, draws the magazine 70 onto the turntable 100. When the magazine 70 is fully inserted onto the turntable 100 this is detected by the sensor 117 which deactivates the motor 110. During loading of the magazine the LED 31 is lit. Once the magazine 70 is loaded, the door 28 shuts by the force of the spring 307. The motor 213 is then activated to slide the plate 134 rearwardly so as to lock the door 28. At this stage a preload sequence is performed to check for the presence of DAT cassettes in the magazine 70. The preload sequence proceeeds as follows under the control of the microprocessor 248:
activation of the motor 213 to cause the plates 132 and 134 to slide so that the connecting pins 160, 161 and 162 on the platform 120 are moved upwardly in the vertical slots 200, 202 and 204 by virtue of the movement of the staircase grooves 206, 208 and 214 past these vertical slots. Once the platform 120 has reached its topmost position a, as detected by the sensor 222, the motor 213 is deactivated;
activation of the motor 170 to move the picker device 122 horizontally relative to the platform 120 and towards the slot in the magazine 70 which houses cassette number four. As the picker device 122 moves rearwardly, the solenoid mounted underneath the platform 120 is activated to splay the picker fingers 178 and 180 outwardly as previously described. The picker device 122 is moved further rearwardly until its front arm 175 abuts the leading edge of the DAT cassette. This is sensed by the sensor device 176 on the front arm 175 and a signal is generated to deactivate the motor 170 to halt further rearward movement of the picker device; having checked the presence of cassette number four the motor 170 is activated to reverse the movement of the picker device 122 relative to the platform 120. Once the picker fingers 178 and 180 are clear of the DAT cassette. the solenoid is deactivated and the picker fingers 178 and 180 return to their normal positions. The reverse movement continues until signals from the sensor 171 indicate that the picker device has been withdrawn fully onto the platform 120 and the motor 170 is deactivated;
activation of the motor 213 to reverse the sliding movement of the plates 132 and 134 so as to lower the platform 120 to position b;
movement of the picker device 122 to check the presence of cassette number five in the manner described above for cassette number four;
activation of the motor 213 to lower the platform 120 to position c;
movement of the picker device 122 to check the presence of cassette number six in the manner described above for cassette number four;
activation of the motor 102 to rotate the turntable 100 and the magazine 70 through 180°. When the sensor 108 detects that the turntable has rotated through 180°, the motor 102 is deactivated;
repetition of the above procedure in order to check the presence of cassettes numbers one, two and three.
When the preload sequence is complete, the LCD 34 indicates that a magazine is present with all six slots occupied by DAT cassettes.

The user then presses the button 36 to select a specific DAT cassette, cassette number five for example. Pressing the button 36 causes the LCD 34 to cycle through the cassette options one to six and pressing the button 36 again when the cassette option number five is displayed selects that particular cassette. The user then presses button 38 to cause cassette number five to be loaded into the tape drive mechanism 50. Depression of the button 38 causes the following sequence of events to occur, under the control of the microprocessor 248:
activation of the motor 102 so as to rotate the turntable 100 through 180°. When the optical sensor 108 detects that the turntable 100 has rotated through 180° the motor 102 is deactivated;
activation of the motor 213 to cause the plates 132 and 134 to slide so that the connecting pins 160, 161 and 162 on the platform 120 are moved upwardly in the vertical slots 200, 202 and 204 by virtue of the movement of the staircase grooves 206, 208 and 214 past these vertical slots. The motor 213 is deactivated in response to signals from the sensors 222 which indicate when the platform has reached position b in the staircase grooves 206, 208 and 214;
activation of the motor 170 to move the picker device 122 horizontally relative to the platform 120 and towards the slot in the magazine 70 which houses cassette number five. The picker device 122 moves rearwardly relative to the platform 120 and, at the appropriate time, as sensed by the sensor 171, the solenoid on the underside of the platform 120 is activated to splay the picker fingers 178 and 180 so that these clear the edges of the DAT cassette. The motor 170 is deactivated in response to signals from the sensor switch assembly 176 which indicate when the DAT cassette abuts the front arm 175 of the picker device 122. Deactivation of the solenoid allows the picker fingers 178 and 180 to spring into the notches 75 on the side edges of the DAT cassette 52 thus providing a positive engagement between the picker device 122 and the DAT cassette 52. The motor 170 then reactivates to reverse the movement of the picker device 122 relative to the platform 120 so as to withdraw the DAT cassette from the magazine 70. The reverse motion of the picker device 122 continues until signals from the sensor 171 indicate that the picker device 122 has been withdrawn fully onto the platform 120 which causes the motor 170 to be deactivated;
activation of the motor 213 to reverse the sliding movement of the plates 132 and 134 in order to lower the platform 120 back to its parked position opposite the drive mechanism 50;
activation of the motor 170 to slide the picker device 122 relative to the platform 120 so as to push the DAT cassette towards the drive mechanism 50;
at the appropriate point in the movement of the picker device 122, as sensed by the sensor 171 on the side piece 140 of the platform 120, the solenoid mounted underneath the platform 120 is activated to cause the picker fingers 178 and 180 to splay and to release their hold on the DAT cassette and to allow the cassette to be drawn into the drive mechanism 50 by its cassette loading mechanism .

The LCD 34 on the front panel 14 then displays the number 5 to indicate that cassette number five is presently loaded into the drive mechanism 50. It also indicates whether the DAT cassette is write-protected (as sensed by the drive mechanism 50). The drive mechanism 50 then reads data from a host computer to the DAT cassette and the progress of data transfer is indicated in the LCD 34. The LCD 34 also indicates whether the drive mechism 50 is performing data compression. Once the DAT cassette is full the drive mechanism 50 automatically disgorges the DAT cassette and the following sequence of events occurs, again under the control of the microprocessor 248:
activation of the motor 170 to move the picker device 122 relative to the platform 120 and towards the drive mechanism 50 and opening of the picker fingers 178 and 180 so that the picker fingers 178 and 180 again engage notches in the DAT cassette. In the manner described above, the motion of the picker device 122 is then reversed to withdraw the DAT cassette onto the platform 120;
activation of the motor 213 to slide the plate 132 forwardly (which causes the plate 134 to slide rearwardly by virtue of the lever 126) so as to raise the platform 120 until it reaches position b;
further movement of the picker device 122 relative to the platform 120 so as to push the DAT cassette towards the magazine 70 and to return it to its slot in the magazine 70, accompanied by activation of the solenoid to cause the picker fingers 178 and 180 to release their hold on the DAT cassette once it is safely in its slot in the magazine 70;

In manual mode the autochanger will then load the remaining cassette numbers six, one, two, three and four, in that order, to continue the back-up operation. That is, in manual mode, the back-up operation starts with the cassette selected by the user and then proceeds automatically through the remaining cassettes in sequence.

When the back-up operation is completed, the user presses the button 40 to cause the magazine 70 to be ejected from the autochanger 10. This causes the following sequence of events:
if required, rotation of the turntable 100 to position the magazine 70 correctly for ejection from the autochanger;
actuation of the motor 213 to move the plate 134 along the horizontal portion 238 of the staircase groove 204 whilst the platform 120 is in its parked position so as to unlock and automatically open the door 28 as previously described.
actuation of the motor 102 to drive the drive wheel 112 in the reverse direction so as to slide the magazine 70 off the turntable 100 until it juts out of the door 28 from where it can be retrieved by the user;
actuation of the motor 213 to reverse the plate 134 to the 'door unlock' position;
after removal of the magazine 70 by the user, the door 28 then closes by the force of the spring 307.

It will be appreciated that many variations on the above described sequence of events are possible if increased user interaction were permitted.

It will be understood that the embodiment just described would require modification in order to operate with a magazine 84 of the type described with reference to Figure 7. Specifically, the turntable 100 would need to be rotatable through successive quarter turns in order for all of the cassettes to be accessible from one direction. A different arrangement other than the toothed drive wheel 112 would need to be provided for helping to retract and eject the magazine eg. two sets of aligned teeth provided on the top and bottom plates 86 and 88 of the magazine 84 for co-operating with two drive wheels in the autochanger 10. Such changes are within the capability of the average person skilled in the art.

Another alternative is for the media items, such as DAT cassettes, to be individually insertable to a fixed rotatable holder within the autochanger rather than having a removable magazine. An example of such an embodiment can be envisaged by imagining either of the magazines described above to be permanently fixed within the autochanger and rotatable by the turntable and the user needing manually to insert individual DAT cassettes through the slot 26 in the front panel 14 of the autochanger 10 and likewise manually to remove individual DAT cassettes.

It should be understood that the present invention is not limited to an autochanger for DAT cassettes but may be used for other types of tape cassette. The number of cassettes able to be stored by the autochanger at any one time will depend on the size of cassette used and the particular form factor within which the autochanger fits.

Whilst the specific embodiment described involves the storage area for media items being above the drive mechanism this is not essential. Alternatively, the drive mechanism could be housed in the upper part of the autochanger with the storage data area for the media items being in the lower part.

## Claims

1. Apparatus (10) for storing items (52) of recording media and for transferring media items to and from a mechanism (50) for reading from and/or writing to the media items (52), said apparatus comprising:
a storage area (15) therein for storing a plurality of media items (52) spaced around and along an axis of rotation (A,B) of said media items;
means for rotating the stored media items as one body about said axis (A,B) to permit access to any of the media items (52) from one direction; and
transfer means (13) operable to collect media items (52) from said one direction and to transfer media items between the storage area and said mechanism (50).

2. Apparatus according to Claim 1 configured, together with said mechanism (50), to fit within a standard peripheral form factor housing (12).

3. Apparatus (10) according to Claim 2 configured, together with said mechanism (50), to fit within a standard 5 1/4 inch peripheral form factor housing (12).

4. Apparatus according to Claim 1, comprising means for storing media items (52) in two stacks equally spaced around said axis of rotation (A,B).

5. Apparatus (10) according to Claim 1, comprising means (84) for storing media items (52) in staggered formation spaced around said axis of rotation (A,B).

6. Apparatus (10) according to Claim 1, comprising means (70,84) for storing six digital audio tape cassettes (52).

7. Apparatus (10) according to Claim 1, adapted to receive into the storage area (15) a magazine (70) carrying media items (52) and wherein the means for rotating (100) is operable to rotate the magazine (70).

8. Apparatus (10) according to Claim 7 comprising a toothed drive wheel (112) for engaging (82) teeth on the magazine (70) to help retract and eject the magazine (70).

9. Apparatus (10) according to any one of the preceding claims, wherein the means for rotating comprises a turntable (100) for rotating the media items (52).

10. Apparatus (10) according to Claim 9, wherein the turntable (100) is mounted on the underside of the top plate (16) of a housing (12) for the apparatus.

11. Apparatus (10) according to Claim 9 or Claim 10 comprising means for rotating the turntable (100) to and fro through 180°.

12. Apparatus (10) according to any one of the preceding claims, wherein the transfer means (13) comprises a platform (120), configured to transport a media item (52) between the storage area (15) and the mechanism, (50) and a picker device (122) which is movable relative to the platform (120) to move media items (52) onto and off of the platform (120).

13. Apparatus (10) according to Claim 12, wherein the picker device (122) comprises opposed picker fingers (178,180) for engaging notches (75) in the side edges of a media item (52).

14. Apparatus (10) according to Claim 13, wherein the picker fingers (178,180) are biassed inwardly, and wherein the apparatus comprises deflecting means (190,192) for automatically deflecting the picker fingers outwardly.

15. Apparatus (10) according to Claim 14, wherein the picker fingers (178,180) are pivotably mounted and wherein the deflecting means comprise(s) two rods (190,192) movable in the same direction by a deflecting member (156) so that each rod abuts one of the picker fingers and deflects it outwardly.

16. Apparatus (10) according to any one of the preceding claims comprising means for moving the transfer means between the storage area (15) and the mechanism (50) in the form of a slidable plate (132) having a cam (206,208) which co-operates with the transfer means (13) and is profiled so that horizontal sliding of the plate (132) causes vertical movement of the transfer means (13).

17. Apparatus (10) according to Claim 16, wherein the cam (206,208) is stepped in shape so as to define a plurality of vertical positions (a,b,c,d) for the transfer means (13).

18. Apparatus (10) according to Claim 16 or Claim 17, wherein the cam is in the form of a groove (206,208) engaged by a connecting pin (161) on the transfer means (13).

19. Apparatus (10) according to any one of Claims 16 to 18, comprising vertical guide means (202) positioned adjacent the cam (206,208) for guiding the vertical movement of the transfer means (13).

20. Apparatus (10) according to Claim 19 comprising a fixed plate (128) having a vertical groove (202) providing the vertical guide means.

21. Apparatus (10) according to any one of Claims 16 to 20, comprising a second slidable plate (134), wherein the first-mentioned slidable plate (132) is positioned on one side of the apparatus and the second slidable plate (134) is positioned on the opposite side of the apparatus, the first slidable plate (132) being interconnected to the second slidable plate (134) so that sliding movement of one of the slidable plates in one direction causes the other slidable plate to slide in the opposite direction.

22. Apparatus (10) according to Claim 21, wherein the first and second slidable plates (132,134) are interconnected by a pivotably mounted arm (126).

23. Apparatus (10) according to Claim 21 or Claim 22, wherein the second slidable plate (134) comprises a cam (214) which is oppositely profiled to the cam (206,208) of the first-mentioned slidable plate (132) and which also co-operates with the transfer means (13).

24. Apparatus (10) according to any one of Claims 16 to 23, wherein a first sliding movement of the or at least one of the slidable plates (132,134) effects opening of a door (28) in the apparatus for receiving media items (52), and a second sliding movement, of the or at least one of the slidable plates (132,134) effects locking of the door (28).

25. Apparatus (10) according to any one of the preceding claims, comprising a generally elongate housing (12), wherein:
the mechanism (50) is positioned at the base and rear of the housing (12) and has an opening facing forwardly in the housing for receiving media items;
the storage area (15) for storing media items (52) is located above the mechanism (50) such that the axis of rotation passes through the mechanism (50); and
the transfer means (13), for transporting media items (52) between the storage area (15) and the mechanism (50), is positioned at the front of the housing (12) and is configured for movement, between the storage area (15) and the mechanism (50), parallel to the axis of rotation.

26. A digital audio tape autochanger comprising apparatus as claimed in any one of the preceding claims.

27. A removable magazine (70) configured for operation in an apparatus as claimed in Claim 7 or Claim 8.

28. Apparatus (10) according to any one of claims 1 - 5 or claims 7 - 25, adapted to receive a plurality of digital audio tape (DAT) cassette media items.

29. Use of apparatus (10) as claimed in any one of claims 1 to 25, to receive data from a host computer system (62) and write said data onto one or more of the media items (52) stored in the apparatus, or to read data from one or more of the media items (52) stored in the apparatus and return said data to a host computer system (62).

## Patentansprüche

1. Vorrichtung (10) zum Speichern von Aufzeichnungsmedienobjekten (52) und zum Übertragen von Medienobjekten zu und von einem Mechanismus (50) zum Lesen von und/oder Schreiben auf die Medienobjekte (52), wobei die Vorrichtung folgende Merkmale aufweist:
einen Speicherbereich (15) in derselben zum Speichern einer Mehrzahl von Medienobjekten (52), die um und entlang einer Drehachse (A, B) der Medienobjekte angeordnet sind;
eine Einrichtung zum Drehen der gespeicherten Medienobjekte als ein Körper um die Achse (A, B), um einen Zugriff auf jedes der Medienobjekte (52) aus einer Richtung zu erlauben; und
eine Übertragungseinrichtung (13), die betreibbar ist, um Medienobjekte (52) von der einen Richtung zu sammeln, und um Medienobjekte zwischen dem Speicherbereich und dem Mechanismus (50) zu übertragen.

2. Vorrichtung gemäß Anspruch 1, die zusammen mit dem Mechanismus (50) konfiguriert ist, um in ein Standardumfangsformfaktorgehäuse (12) zu passen.

3. Vorrichtung (10) gemäß Anspruch 2, die zusammen mit dem Mechanismus (50) konfiguriert ist, um in ein Standard-5-1/4-Zoll-Umfangsformfaktorgehäuse (12) zu passen.

4. Vorrichtung gemäß Anspruch 1, die eine Einrichtung zum Speichern von Medienobjekten (52) in zwei Stapeln, die um die Drehachse (A, B) gleich beabstandet sind, aufweist.

5. Vorrichtung (10) gemäß Anspruch 1, die eine Einrichtung (84) zum Speichern von Medienobjekten (52) in einer gestaffelten Formation um die Drehachse (A, B) beabstandet aufweist.

6. Vorrichtung (10) gemäß Anspruch 1, die eine Einrichtung (70, 84) zum Speichern von sechs Digitalaudiobandkassetten (52) aufweist.

7. Vorrichtung (10) gemäß Anspruch 1, die angepaßt ist, um in dem Speicherbereich (15) ein Magazin (70) aufzunehmen, das Medienobjekte (52) trägt, und bei der die Einrichtung zum Drehen (100) betreibbar ist, um das Magazin (70) zu drehen.

8. Vorrichtung (10) gemäß Anspruch 7, die ein gezahntes Antriebsrad (112) zum Ineingriffnehmen (82) von Zähnen an dem Magazin (70) aufweist, um das Einziehen und das Auswerfen des Magazins (70) zu unterstützen.

9. Vorrichtung (10) gemäß einem beliebigen der vorhergehenden Ansprüche, bei der die Einrichtung zum Drehen einen Drehtisch (100) zum Drehen der Medienobjekte (52) aufweist.

10. Vorrichtung (10) gemäß Anspruch 9, bei der der Drehtisch (100) an der Unterseite der Deckplatte (16) eines Gehäuses (12) für die Vorrichtung angebracht ist.

11. Vorrichtung (10) gemäß Anspruch 9 oder Anspruch 10, die eine Einrichtung zum Drehen des Drehtisches (100) hin und her über 180° aufweist.

12. Vorrichtung (10) gemäß einem beliebigen der vorhergehenden Ansprüche, bei der die Übertragungseinrichtung (13) eine Plattform (120), die konfiguriert ist, um ein Medienobjekt (52) zwischen dem Speicherbereich (15) und dem Mechanismus (50) zu transportieren, und eine Aufnehmervorrichtung (122) aufweist, die relativ zu der Plattform (120) bewegbar ist, um Medienobjekte (52) auf die und von der Plattform (120) zu bewegen.

13. Vorrichtung (10) gemäß Anspruch 12, bei der die Aufnehmervorrichtung (122) gegenüberliegende Aufnehmerfinger (178, 180) zum Ineingriffnehmen von Kerben (75) in den Seitenkanten eines Medienobjekts (52) aufweist.

14. Vorrichtung (10) gemäß Anspruch 13, bei der die Aufnehmerfinger (178, 180) nach innen vorgespannt sind, und bei der die Vorrichtung eine Ablenkeinrichtung (190, 192) zum automatischen Ablenken der Aufnehmerfinger nach außen aufweist.

15. Vorrichtung (10) gemäß Anspruch 14, bei der die Aufnehmerfinger (178, 180) drehbar angebracht sind, und bei der die Ablenkeinrichtung zwei Stangen (190, 192) aufweist, die in der gleichen Richtung durch ein Ablenkbauglied (156) bewegbar sind, so daß jede Stange an einen der Aufnehmerfinger angrenzt und denselben nach außen ablenkt.

16. Vorrichtung (10) gemäß einem beliebigen der vorhergehenden Ansprüche, die eine Einrichtung zum Bewegen der Übertragungseinrichtung zwischen dem Speicherbereich (15) und dem Mechanismus (50) in der Form einer gleitbaren Platte (132) aufweist, die eine Nocke (206, 208) aufweist, die mit der Übertragungseinrichtung (13) zusammenwirkt und derart profiliert ist, daß ein horizontales Gleiten der Platte (132) eine vertikale Bewegung der Übertragungseinrichtung (13) bewirkt.

17. Vorrichtung (10) gemäß Anspruch 16, bei der die Nocke (206, 208) stufenförmig ist, um eine Mehrzahl von vertikalen Positionen (a, b, c, d) für die Übertragungseinrichtung (13) zu definieren.

18. Vorrichtung (10) gemäß Anspruch 16 oder Anspruch 17, bei der die Nocke die Form einer Rille (206, 208) aufweist, die durch einen Verbindungsstift (161) an der Übertragungseinrichtung (13) in Eingriff genommen ist.

19. Vorrichtung (10) gemäß einem beliebigen der Ansprüche 16 bis 18, die eine vertikale Führungseinrichtung (202) aufweist, die benachbart zu der Nocke (206, 208) zum Führen der vertikalen Bewegung der Übertragungseinrichtung (13) positioniert ist.

20. Vorrichtung (10) gemäß Anspruch 19, die eine feste Platte (128) aufweist, die eine vertikale Rille (202) aufweist, die die vertikale Führungseinrichtung vorsieht.

21. Vorrichtung (10) gemäß einem beliebigen der Ansprüche 16 bis 20, die eine zweite gleitbare Platte (134) aufweist, bei der die zuerst erwähnte gleitbare Platte (132) auf einer Seite der Vorrichtung positioniert ist, und die zweite gleitbare Platte (134) auf der gegenüberliegenden Seite der Vorrichtung positioniert ist, wobei die erste gleitbare Platte (132) mit der zweiten gleitbaren Platte (134) derart verbunden ist, daß eine Gleitbewegung einer der gleitbaren Platten in einer Richtung bewirkt, daß die andere gleitbare Platte in der entgegengesetzten Richtung gleitet.

22. Vorrichtung (10) gemäß Anspruch 21, bei der die erste und die zweite gleitbare Platte (132, 134) durch einen drehbar angebrachten Arm (126) verbunden sind.

23. Vorrichtung (10) gemäß Anspruch 21 oder Anspruch 22, bei der die zweite gleitbare Platte (134) eine Nocke (214) aufweist, die zu der Nocke (206, 208) der zuerst erwähnten Seitenplatte (132) entgegengesetzt profiliert ist, und die ebenfalls mit der Übertragungseinrichtung (13) zusammenwirkt.

24. Vorrichtung (10) gemäß einem beliebigen der Ansprüche 16 bis 23, bei der eine erste Gleitbewegung der oder mindestens einer der gleitbaren Platten (132, 134) ein Öffnen einer Tür (28) in der Vorrichtung zum Aufnehmen von Medienobjekten (52) bewirkt, und eine zweite Gleitbewegung der oder mindestens einer der gleitbaren Platten (132, 134) ein Verriegeln der Tür (28) bewirkt.

25. Vorrichtung (10) gemäß einem beliebigen der vorhergehenden Ansprüche, die ein allgemein längliches Gehäuse (12) aufweist, wobei
der Mechanismus (50) an der Basis und der Rückseite des Gehäuses (12) positioniert ist und eine Öffnung aufweist, die nach vorne in dem Gehäuse zum Aufnehmen von Medienobjekten gerichtet ist;
der Speicherbereich (15) zum Speichern von Medienobjekten (52) oberhalb des Mechanismus (50) derart positioniert ist, daß die Drehachse durch den Mechanismus (50) läuft; und
die Übertragungseinrichtung (13) zum Transportieren von Medienobjekten (52) zwischen dem Speicherbereich (15) und dem Mechanismus (50) an der Vorderseite des Gehäuses (12) positioniert ist und zur Bewegung zwischen dem Speicherbereich (15) und dem Mechanismus (50) parallel zu der Drehachse konfiguriert ist.

26. Ein Digitalaudiobandwechsler, der eine Vorrichtung gemäß einem beliebigen der vorhergehenden Ansprüche aufweist.

27. Ein entfernbares Magazin (70), das zum Betrieb in einer Vorrichtung gemäß Anspruch 7 oder Anspruch 8 konfiguriert ist.

28. Vorrichtung (10) gemäß einem beliebigen der Ansprüche 1 bis 5 oder der Ansprüche 7 bis 25, die angepaßt ist, um eine Mehrzahl von Digitalaudioband- (DAT-) Kassettenmedienobjekten aufzunehmen.

29. Verwenden der Vorrichtung (10) gemäß einem beliebigen der Ansprüche 1 bis 25, um Daten von einem Hostcomputersystem (62) zu empfangen, und um die Daten auf eines oder mehrere der Medienobjekte (52) zu schreiben, die in der Vorrichtung gespeichert sind, oder um Daten von einem oder mehreren der Medienobjekte (52), die in der Vorrichtung gespeichert sind, zu lesen, und die Daten zu einem Hostcomputersystem (62) zurück zu geben.

## Revendications

1. Appareil (10) destiné au stockage d'articles (52) de support d'enregistrement, et au transfert d'articles de support, vers un mécanisme (50) de lecture et/ou d'écriture dans les articles (52) de support et à partir de ce mécanisme, ledit appareil comprenant :
◆ une zone de stockage (15) pour stocker une série d'articles (52) de support espacés autour d'un axe de rotation (A, B) desdits articles de support et le long de cet axe ;
◆ un moyen de rotation des articles de support, sous la forme d'un seul corps, autour dudit axe (A, B) pour permettre d'accéder, à partir de l'une des directions, à l'un quelconque des articles (52) de support ; et
◆ un moyen de transfert (13) pouvant être mis en oeuvre pour collecter, à partir de ladite direction, des articles (52) de support et pour transférer des articles de support entre la zone de stockage et ledit mécanisme (50).

2. Appareil selon la revendication 1 configuré pour s'ajuster, avec ledit mécanisme (50), à l'intérieur d'un boîtier (12) à facteur de forme périphérique normalisé.

3. Appareil (10) selon la revendication 2 configuré pour s'ajuster, avec ledit mécanisme (50) à l'intérieur d'un boîtier (12) à facteur de forme périphérique normalisé de 5 1/4 pouces, soit 133,35 mm.

4. Appareil selon la revendication 1, qui comprend un moyen de stockage d'articles (52) de support en deux piles également espacées autour dudit axe de rotation (A, B).

5. Appareil (10) selon la revendication 1, comprenant un moyen (84) de stockage d'articles (52) de support selon une formation décalée, espacés autour dudit axe de rotation (A, B).

6. Appareil (10) selon la revendication 1, qui comprend un moyen (70, 84) de stockage de six cassettes (52) de bandes numériques audio.

7. Appareil (10) selon la revendication 1, apte à recevoir dans la zone de stockage (15) un magasin (70) qui porte des articles (52) de support et dans lequel le moyen de rotation (100) peut intervenir pour faire tourner le magasin (70).

8. Appareil (10) selon la revendication 7 comprenant un pignon d'entraînement (112) pour s'engrener (82) avec des dents agencées sur le magasin (70) pour aider à rétracter et éjecter le magasin (70).

9. Appareil (10) selon l'une quelconque des revendications précédentes, dans lequel le moyen de rotation comprend un plateau tournant (100) pour faire tourner les articles (52) de support.

10. Appareil (10) selon la revendication 9, dans lequel le plateau tournant (100) est monté sur le côté inférieur de la plaque supérieure (16) d'un boîtier (12) destiné à l'appareil.

11. Appareil (10) selon la revendication 9 ou la revendication 10 comprenant un moyen de mise en rotation de 180 °, à va-et-vient, du plateau tournant (100).

12. Appareil (10) selon l'une quelconque des revendications précédentes, dans lequel le moyen de transfert (13) comprend une plate-forme (120), configurée pour transporter un article (52) de support entre la zone de stockage (15) et le mécanisme (50), et un dispositif de prélèvement (122) qui est mobile par rapport à la plate-forme (120) pour amener des articles (52) de support sur la plate-forme (120) et en enlever de celle-ci.

13. Appareil (10) selon la revendication 12, dans lequel le dispositif de prélèvement (122) comprend des doigts opposés de prélèvement (178, 180) pour venir en prise dans des encoches (75) ménagées dans les bords latéraux d'un article (52) de support.

14. Appareil (10) selon la revendication 13, dans lequel les doigts de prélèvement (170, 180) sont sollicités vers l'intérieur, et dans lequel l'appareil comprend un moyen de déflexion (190, 192) pour défléchir automatiquement vers l'extérieur les doigts de prélèvement.

15. Appareil (10) selon la revendication 14, dans lequel les doigts de prélèvement (178, 180) sont montés à pivotement et dans lequel le ou les moyens de déflexion comprend ou comprennent deux tiges (190, 192) mobiles dans la même direction sous l'effet d'un organe déflecteur (156) de façon que chaque tige vienne en butée sur l'un des doigts de prélèvement et le défléchisse vers l'extérieur.

16. Appareil (10) selon l'une quelconque des revendications précédentes qui comprend un moyen de déplacement du moyen de transfert entre la zone de stockage (15) et le mécanisme (50), en forme de plaque coulissante (132) pourvue d'une came (206, 208) qui coopère avec le moyen de transfert (13) et est profilée d'une manière telle qu'un coulissement horizontal de la plaque (132) provoque un déplacement vertical du moyen de transfert (13).

17. Appareil (10) selon la revendication 16, dans lequel la came (206, 208) est d'une configuration à gradins de façon à définir une série de positions verticales (a, b, c, d) pour le moyen de transfert (13).

18. Appareil (10) selon la revendication 16 ou la revendication 17, dans lequel la came est en forme de rainure (206, 208), dans laquelle pénètre une broche de connexion (161) agencée sur le moyen de transfert (13).

19. Appareil (10) selon l'une des revendications 16 à 18 qui comprend un moyen de guidage vertical (202) positionné adjacent à la came (206, 208) pour guider le déplacement vertical du moyen de transfert (13).

20. Appareil (10) selon la revendication 19 qui comprend une plaque fixe (128) dans laquelle est ménagée une rainure verticale (202) qui constitue le moyen de guidage vertical.

21. Appareil (10) selon l'une quelconque des revendications 16 à 20, qui comprend une deuxième plaque coulissante (134), dans lequel la plaque coulissante (132) mentionnée en premier lieu est positionnée sur l'un des côtés de l'appareil, et la deuxième plaque coulissante (134) est positionnée sur le côté opposé de l'appareil, la première plaque coulissante (132) étant connectée à la deuxième plaque coulissante (134) d'une manière telle qu'un déplacement à coulissement de l'une des plaques coulissantes dans un sens amène l'autre plaque coulissante à coulisser dans le sens opposé.

22. Appareil (10) selon la revendication 21, dans lequel la première et la deuxième plaques coulissantes (132, 134) sont connectées par un bras (126) monté à pivotement.

23. Appareil (10) selon la revendication 21 ou la revendication 22 dans lequel la deuxième plaque coulissante (134) comprend une came (214) dont le profil est opposé à celui de la came (206, 208) de la plaque coulissante (132) mentionnée en premier lieu et qui coopère elle aussi avec le moyen de transfert (13).

24. Appareil (10) selon l'une quelconque des revendications 16 à 23, dans lequel un premier déplacement à coulissement de la plaque coulissante ou d'au moins l'une d'entre elles (132, 134) provoque une ouverture d'une porte (28) dans l'appareil pour recevoir des articles (52) de support, et un deuxième déplacement à coulissement de la plaque coulissante ou d'une au moins l'une d'elles (132, 134) provoque un verrouillage de la porte (28).

25. Appareil (10) selon l'une quelconque des revendications précédentes, qui comprend un boîtier généralement allongé (12) dans lequel :
◆ le mécanisme (50) est positionné à la base et à l'arrière du boîtier (12) et comporte une ouverture qui fait face vers l'avant dans le boîtier pour recevoir des articles de support ;
◆ la zone de stockage (15) destinée au stockage des articles (52) de support est située au-dessus du mécanisme (50) de façon que l'axe de rotation traverse le mécanisme (50) ; et
◆ le moyen de transfert (13), destiné à transporter des articles (52) de support entre la zone de stockage (15) et le mécanisme (50), est positionné à l'avant du boîtier (12) et est configuré pour se déplacer, entre la zone de stockage (15) et le mécanisme (50), parallèlement à l'axe de rotation.

26. Un chargeur automatique de bandes numériques audio comprenant un appareil selon l'une quelconque des revendications précédentes ;

27. Un magasin amovible (70) configuré pour fonctionner dans un appareil conforme à la revendication 7 ou à la revendication 8.

28. Appareil selon l'une quelconque des revendications 1 à 5, ou des revendications 7 à 25 destiné à recevoir une série d'articles de support à cassettes de bandes numériques audio (DAT).

29. Utilisation d'un appareil (10) selon l'une quelconque des revendications 1 à 25 pour recevoir des données provenant d'un système informatique hôte (62) et pour écrire lesdites données sur un ou plusieurs articles (52) de support stockés dans l'appareil, ou pour lire des données sur un ou plusieurs des articles (52) de support stockés dans l'appareil et pour envoyer lesdites données à un système informatique hôte (62).
